# EUROPÄISCHE PATENTSCHRIFT

(11) **EP 0 438 466 B1**
(45) Veröffentlichungstag und Bekanntmachung des Hinweises auf die Patenterteilung: **09.06.1993**
(21) Anmeldenummer: 89911545.5
(22) Anmeldetag: 10.10.1989
(51) Int. Cl.: F04D 13/06

(54) **FILTEREINRICHTUNG FÜR EINEN SPALTROHRMOTOR**
FILTERING DEVICE FOR A CANNED MOTOR PUMP
DISPOSITIF FILTRANT POUR MOTEUR A GAINE

(30) Priorität: 12.10.1988 DE 3834667
(43) Veröffentlichungstag der Anmeldung: 31.07.1991
(73) Patentinhaber: KSB Aktiengesellschaft, 67227 Frankenthal (DE)
(72) Erfinder: RUPPRECHT, Peter, D-8580 Bayreuth (DE)
(86) Internationale Anmeldenummer: EP8901194
(87) Internationale Veröffentlichungsnummer: WO9004110

(56) Entgegenhaltungen:
- DE-A- 2 100 345
- DE-A- 3 513 832
- DK-B- 0 149 716
- GB-A- 1 237 633

## Beschreibung

Gegenstand der Erfindung ist eine Filtereinrichtung gemäß dem Oberbegriff des Anspruches 1.

Derartige Filtereinrichtungen sind - beispielsweise durch die GB-A 1 237 633 - in verschiedenen Ausführungen und mit verschiedenen Filtereinsätzen bekannt. Sie finden vor allem in Spaltrohrmotorpumpen Einsatz, welche zur Förderung verunreinigter Flüssigkeiten dienen. Die bekannten Filtereinrichtungen sind meist in der zwischen dem Druckraum der Kreiselpumpe und dem Rotorraum des Spaltrohrmotors gelegenen Wand angeordnet. Ihr aus einem porösen Material, aus einem Sieb oder aus ähnlichem bestehender Filtereinsatz neigt allerdings dazu, sich nach einer von Art und Menge der festen Beimengungen abhängigen Zeit zuzusetzen. Dies führt zu einer Unterbrechung des durch den Rotorraum geleiteten Spülstromes, so daß die im Spaltrohrmotor entstehende Verlustwärme nicht mehr in ausreichendem Maße abgeführt wird. Aus diesem Umstand resultiert die Notwendigkeit einer ständigen Überwachung und häufiger Wartungsarbeiten (Auswechseln oder Reinigen des Filtereinsatzes).

Der Erfindung liegt die Aufgabe zugrunde, eine Filtereinrichtung für Spaltrohrmotoren zu schaffen, die einerseits Feststoffpartikel von einer die nachgeschalteten Spalte gefährdenden Größe zurückhält und die andererseits nicht durch ein Zusetzen oder Verstopfen gefährdet ist.

Die gestellte Aufgabe wird erfindungsgemäß dadurch gelöst, daß zwischen dem Gehäuse und der Rotorwelle ein durch Buchsen aus hartem Material begrenzter Filterspalt gebildet wird, dessen kleinste Weite geringer ist als die kleinste Weite der im Fortgang des Spülstromes folgenden Spalte innerhalb des Rotorraumes.

Das Prinzip der Erfindung besteht darin, kleine (ungefährliche) Partikel passieren zu lassen, größere Beimengungen jedoch zurückzuhalten, bis sie von den Wandungen der den Filterspalt bildenden Buchsen zu einer ungefährlichen Größe zermahlen sind.

Die Unteransprüche enthalten zweckmäßige Ausgestaltungen des Erfindungsgegenstandes. Sie enthalten vor allem Maßnahmen, mit deren Hilfe die mahlende Wirkung des Filterspaltes gesteigert und die Lebensdauer der den Filterspalt bildenden Buchsen vergrößert werden kann.

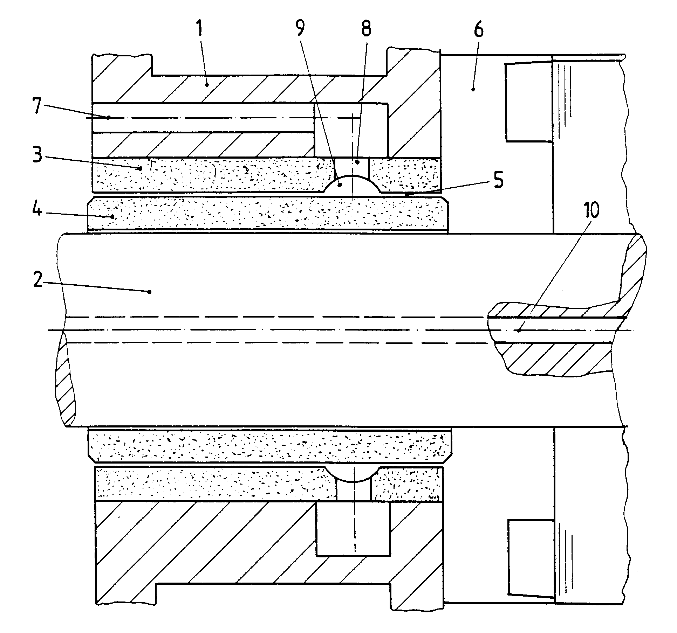

Anhand eines Ausführungsbeispiels wird die Erfindung näher erläutert. Die Zeichnung zeigt einen Ausschnitt aus einem Spaltrohrmotor im Bereich der Filtereinrichtung.

Der Spaltrohrmotor besitzt eine in einem Gehäuse (1) angeordnete Rotorwelle (2). In das Gehäuse (1) ist eine aus Keramik bestehende Buchse (3) eingesetzt, die eine auf die Rotorwelle (2) aufgeschobene, ebenfalls aus Keramik bestehende Buchse (4) umschließt. Die einander zugekehrten Wände der Buchsen (3, 4) begrenzen einen Filterspalt (5), der dem Rotorraum (6) des Spaltrohrmotors vorgeschaltet ist.

Der Zuführung von Spülflüssigkeit dient ein axial im Gehäuse (1) verlaufender Kanal (7). Der Kanal (7) mündet in mehrere über den Umfang verteilte, radial in der Buchse (3) verlaufende Bohrungen (8), die ihrerseits in einem ebenfalls von der Buchse (3) gebildeten Ringraum (9) münden. Der Ringraum (9) verjüngt sich in Richtung des vor dem Rotorraum (6) gelegenen Filterspaltes (5).

Für den Spülflüssigkeitsaustritt aus dem Rotorraum (6) ist ein axial in der Welle (2) verlaufender Kanal (10) vorgesehen. Die in der über den Kanal (7) und die Bohrungen (8) zum Ringraum (9) gelangenden Spülflüssigkeit enthaltenen Feststoffpartikel werden, sofern sie größer sind als die Weite des Filterspaltes (5), zunächst in dem vor dem Filterspalt (5) kreisenden Flüssigkeitsring festgehalten. Die zum Rotorraum gerichtete Strömung erfaßt immer wieder einen Teil der Feststoffpartikel und führt sie an den Eintritt in den Filterspalt (5). Dort werden die Partikel allmählich zermahlen, bis sie schließlich in den Filterspalt (5) eintreten. Da sie auch hier noch mahlend bearbeitet werden, verbleibt ihnen am Ende des Filterspaltes nur noch eine die nachfolgenden Spalte nicht mehr gefährdende Größe. Sie werden nun von der Spülflüssigkeit mitgenommen, durch den Rotorraum (6) geführt und über den Kanal (10) abgeleitet.

## Patentansprüche

1. Filtereinrichtung für einen Spaltrohrmotor, welche feste Beimengungen eines durch den Rotorraum des Spaltrohrmotors und damit durch die zwischen der Rotorwelle und dem Gehäuse gelegenen Lager- und Explosionsschutzspalte geleiteten Spülstromes am Eintritt in den Rotorraum zurückhält, **dadurch gekennzeichnet,** daß zwischen dem Gehäuse (1) und der Rotorwelle (2) ein durch Buchsen (3, 4) aus hartem Material begrenzter Filterspalt (5) gebildet wird, dessen kleinste Weite geringer ist als die kleinste Weite der im Fortgang des Spülstromes folgenden Spalte innerhalb des Rotorraumes (6).

2. Filtereinrichtung nach Anspruch 1, dadurch gekenn zeichnet, daß die den Filterspalt (5) bildenden Buchsen (3, 4) aus keramischem Material bestehen.

3. Filtereinrichtung nach Anspruch 1, dadurch gekennzeichnet, daß die den Filterspalt (5) bildenden Buchsen (3, 4) eine rauhe Oberfläche besitzen.

4. Filtereinrichtung nach Anspruch 1, gekennzeichnet durch einen axialen Eintritt in den Filterspalt (5).

5. Filtereinrichtung nach Anspruch 1, gekennzeichnet durch einen radialen, über eine oder mehrere Bohrungen (8) erfolgenden Eintritt in den Filterspalt (5).

6. Filtereinrichtung nach Anspruch 1, dadurch gekennzeichnet, daß der Filterspalt (5) eine sich in Richtung des Rotorraumes (6) verjüngende Gestalt besitzt.

7. Filtereinrichtung, gekennzeichnet durch einen vor dem Filterspalt (5) gelegenen Ringraum (9), dessen Durchmesser größer ist als der Außendurchmesser des Filterspaltes (5).

## Claims

1. A filtering device for a canned motor, which at the inlet into the rotor space retains solids in a swilling flow passed through the rotor space of the canned motor and consequently through the bearing and explosion preventing gaps arranged between the rotor shaft and the housing, characterized in that between the housing (1) and the rotor shaft (2) a filtering gap (5) is formed which is delimited by bushings (3 and 4) of hard material, the minimum width of the gap being less than this minimum width of the following gaps in the path of the swilling flow within the rotor space (6).

2. The filtering device as claimed in claim 1, characterized in that the bushings (3 and 4) defining the filter gap (5) consist of ceramic material.

3. The filtering device as claimed in claim 1, characterized in that bushings (3 and 4) defining the filter gap (5) have a rough surface.

4. The filtering device as claimed in claim 1, characterized by an axial inlet into the filter gap (5).

5. The filtering device as claimed in claim 1, characterized by a radial inlet into the filter gap (5) via one or a plurality of holes (8).

6. The filtering device as claimed in claim 1, characterized in that the filter gap (5) has a form which becomes narrower towards the rotor space (6).

7. The filtering device, characterized by an annular space (9) arranged upstream from the filter gap (5) whose diameter is larger than the external diameter of the filter gap (5).

## Revendications

1. Dispositif de filtrage pour un moteur à gaine qui retient, à l'entrée dans la chambre du rotor, des impuretés solides d'un courant de rinçage dirigé à travers la chambre du rotor du moteur à gaine et ainsi à travers les fentes de palier et de protection antidéflagrante situées entre l'axe du rotor et le boîtier, caractérisé en ce qu'une fente de filtrage (5) est formée entre le boîtier (1) et l'axe du rotor (2) et limitée par des douilles (3, 4) en matériau dur, fente dont la plus petite largeur est plus faible que la plus petite largeur de la fente suivante se trouvant dans le sens du courant de rinçage à l'intérieur de la chambre du rotor (6).

2. Dispositif de filtrage selon la revendication 1 caractérisé en ce que les douilles formant la fente de filtrage (5) sont en matériau céramique.

3. Dispositif de filtrage selon la revendication 1 caractérisé en ce que les douilles (3, 4) formant la fente de filtage (5) ont une surface rugueuse.

4. Dispositif de filtrage selon la revendication 1 caractérisé par une entrée axiale dans la fente de filtrage (5).

5. Dispositif de filtrage selon la revendication 1 caractérisé par une entrée radiale dans la fente de filtrage (5) par l'intermédiaire d'un ou de plusieurs taraudages (8).

6. Dispositif de filtrage selon la revendication 1 caractérisé en ce que la fente de filtrage (5) possède une forme qui rétrécit en direction de la chambre du rotor (6).

7. Dispositif de filtrage caractérisé par une chambre annulaire (9) placée devant la fente de filtrage (5) et dont le diamètre est supérieur au diamètre externe de la fente de filtrage (5).
